# EUROPEAN PATENT APPLICATION

(11) **EP 2 515 144 A1**
(43) Date of publication of application: **24.10.2012**
(21) Application number: 10837026.3
(22) Date of filing: 10.12.2010
(51) Int. Cl.: G01S 19/39

(54) **METHOD AND SYSTEM FOR REALIZING NAVIGATION ON PERSONAL COMPUTER BY GPS MOBILE PHONE**

(30) Priority: 15.12.2009 CN 200910188948
(71) Applicant: Huizhou Tcl Mobile Communication Co., Ltd., Huizhou, Guangdong 516006 (CN)
(72) Inventor: ZHOU, Jinggao, Huizhou Guangdong 516006 (CN); YOU, Mengzhe, Huizhou Guangdong 516006 (CN)
(74) Representative: Viering, Jentschura & Partner
(86) International application number: PCT/CN2010/079660
(87) International publication number: WO 2011/072589

(57) **Abstract**

A method for a GPS mobile phone to accomplish navigation on a PC and a system thereof are disclosed. The method comprises: the GPS mobile phone acquires a current GPS signal, transforms the GPS signal into NMEA data, and then transmits the NMEA data to the PC driving module through communication with the PC driving module; the PC driving module receives the NMEA data and transmits the NMEA data to the virtual serial port driving module; the virtual serial port driving module transforms the NMEA data into serial data, generates a second virtual serial port, and transmits the serial data to the navigation module via the second virtual serial port; and the navigation module reads the serial data for displaying. In this way, the navigation function of the GPS mobile phone can be achieved on the PC, which brings about great convenience to the user.

## Description

### FIELD OF THE INVENTION

The present disclosure generally relates to the global positioning system (GPS) navigation technologies, and more particularly, to a method for a GPS mobile phone to achieve navigation on a personal computer (PC) and a system thereof.

### BACKGROUND OF THE INVENTION

With development of mobile phone technologies, mobile phones now have increasingly more functions, for example, the functions of image capturing, MP3, MP4, GPS and the like. Currently, mobile phones using the Windows Mobile operation system, the Linux operation system and the Threadx operation system generally are all provided with GPS functions, and are usually called GPS mobile phones. The navigation function of GPS mobile phones can only be used by their own terminals. However, because display screens of GPS mobile phones are relatively small, it is inconvenient for the user to use. On the other hand, PCs usually have large display screens, but if it is desired to accomplish satellite positioning by means of a PC, the user must additionally purchase a PC GPS module in addition to a GPS mobile phone, which is also inconvenient for the user.

Accordingly, improvements and advancements still have to be made in the art.

### SUMMARY OF THE INVENTION

An objective of the present disclosure is to provide a method for a GPS mobile phone to achieve navigation on a PC and a system thereof. By transmitting data obtained by the GPS mobile phone to the PC through communication between the GPS mobile phone and the PC, the navigation function can be achieved on the PC.

To achieve the aforesaid objective, the present disclosure adopts the following technical solutions:
A method for a GPS mobile phone to accomplish navigation on a personal computer (PC), wherein a system for the GPS mobile phone to achieve navigation on the PC comprises the GPS mobile phone and the PC connected to the GPS mobile phone; the GPS mobile phone comprises a GPS hardware module, a GPS driving module and a mobile phone driving module; the PC comprises a PC driving module, a virtual serial port driving module and a navigation module, the method comprising the following steps of:
   A. the GPS hardware module acquiring a current GPS signal and transmitting the GPS signal to the GPS driving module;
   B. the GPS driving module transforming the GPS signal into national marine electronics association (NMEA) data, generating a first virtual serial port and transmitting the NMEA data to the mobile phone driving module via the first virtual serial port;
   C. the mobile phone driving module communicating with the PC driving module and transmitting the NMEA data to the PC driving module;
   D. the PC driving module receiving the NMEA data and transmitting the NMEA data to the virtual serial port driving module;
   E. the virtual serial port driving module transforming the NMEA data into serial data and generating a second virtual serial port so as to transmit the serial data to the navigation module through the second virtual serial port; and
   F. the navigation module reading the serial data for displaying.

Preferably in the method, the step B further comprises:
the GPS driving module further generates a third virtual serial port and commissioning information when the GPS driving module transforms the GPS signal into the NMEA data, and the commissioning information is transmitted to the mobile phone driving module via the third virtual serial port.

Preferably, the method further comprises the following step between the step B and the step C:
B 1. storing the NMEA data from the GPS driving module into a first buffering unit of the mobile phone driving module.

Preferably, the method further comprises the following step between the step E and the step F:
E1. storing the serial data from the virtual serial port driving module into a second buffering unit of the virtual serial port driving module.

Preferably in the method, the mobile phone driving module communicates with the PC driving module in a USB data transmission manner.

A system for a GPS mobile phone to achieve navigation on a PC, comprising the GPS mobile phone and the PC connected to the GPS mobile phone, wherein the GPS mobile phone comprises a GPS hardware module, a GPS driving module and a mobile phone driving module, and the PC comprises a PC driving module, a virtual serial port driving module and a navigation module;
the GPS hardware module is configured to acquire a current GPS signal and transmit the GPS signal to the GPS driving module;
the GPS driving module is configured to transform the GPS signal into NMEA data, generate a first virtual serial port, and transmit the NMEA data to the mobile phone driving module via the first virtual serial port;
the mobile phone driving module is configured to communicate with the PC driving module and transmit the NMEA data to the PC driving module;
the PC driving module is connected to the mobile phone driving module and is configured to receive the NMEA data and transmit the NMEA data to the virtual serial port driving module;
the virtual serial port driving module is configured to transform the NMEA data into serial data, generate a second virtual serial port and transmit the serial data to the navigation module; and
the navigation module is configured to read the serial data for displaying.

Preferably in the system, the mobile phone module comprises a first buffering unit configured to store the NMEA data of the mobile phone driving module.

Preferably in the system, the virtual serial port driving module comprises a second buffering unit configured to store the serial data of the virtual serial port driving module.

According to the method for a GPS mobile phone to accomplish navigation on a PC and the system thereof, NMEA (National Marine Electronics Association) data received by the GPS mobile phone is transmitted to the PC. Then, a virtual serial port is generated by the PC to transform the NMEA data into serial data for transmission to the navigation module of the PC. The serial data is then read and displayed by the navigation module. In this way, the navigation function of the GPS mobile phone is achieved on the PC, which brings about great convenience to the user.

### BRIEF DESCRIPTION OF THE DRAWINGS

FIG. 1 is a flowchart of a method according to an embodiment of the present disclosure.
FIG. 2 is a block diagram according to an embodiment of the present disclosure.

### DETAILED DESCRIPTION OF THE INVENTION

For the purpose of the present invention, technical solutions and the effect more clearly,, the present invention is further described in detail below with reference to the accompanying drawings and embodiments.

According to the present disclosure, a GPS mobile phone acquires a current GPS signal and transforms it into NMEA data readable by the mobile phone. Then, the NMEA data is transmitted to a PC through USB and a virtual serial port is generated by the PC so as to transform the NMEA data into serial data through the virtual serial port. The serial data is then stored in a buffer of the virtual serial port for use by a navigation module of the PC.

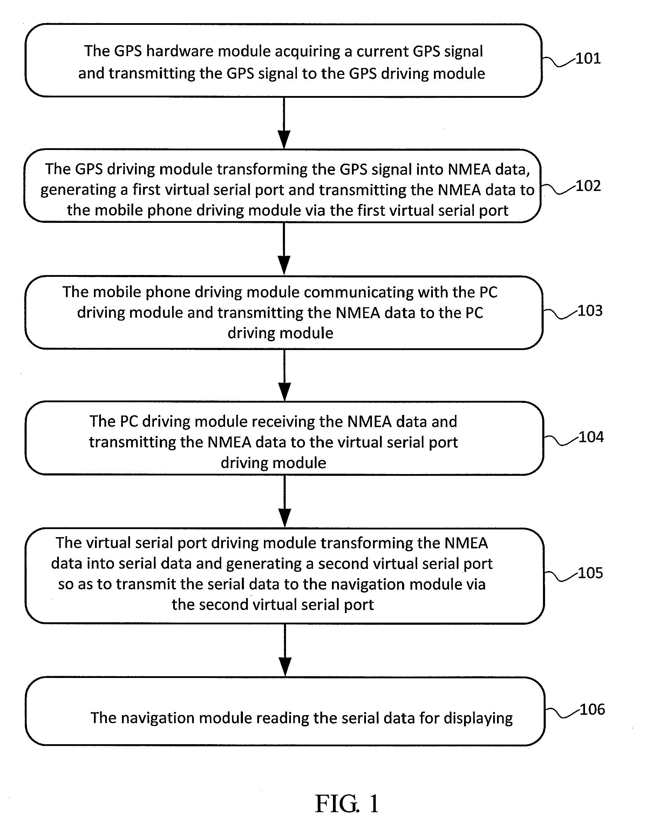

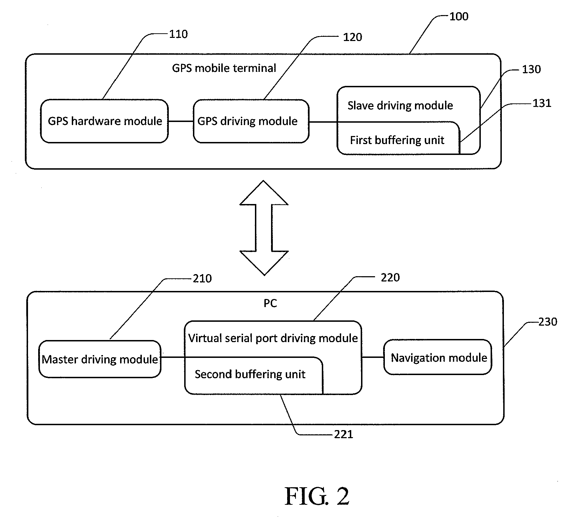

As shown in FIG. 2, a system for a GPS mobile phone to achieve navigation on a PC comprises the GPS mobile phone 100 and the PC 200 connected to the GPS mobile phone 100. The GPS mobile phone 100 comprises a GPS hardware module 110, a GPS driving module 120 and a mobile phone driving module 130; and the PC 200 comprises a PC driving module 210, a virtual serial port driving module 220 and a navigation module 230. A method for the GPS mobile phone to achieve navigation on the PC is shown in FIG. 1, which comprises the following steps.

101. the GPS hardware module acquires a GPS signal and transmits the GPS signal to the GPS driving module.

According to the method of the present disclosure, the GPS mobile phone 100 needs to activate its navigation function and communicate with the PC 200 so as to be operated on the PC. Therefore, a USB data cable shall be used to connect the GPS mobile phone to the PC. In response to this, a signal of the GPS mobile phone is detected by the PC driving module 210 of the PC, and then modules including a GPS module, an RNDIS network card module and a USB flash disk module are displayed on a screen of the GPS mobile phone. At this time, the GPS module function of the GPS mobile phone must be activated. Then, the GPS hardware module 110 acquires a current GPS signal and transmits the GPS signal to the GPS driving module.

102. the GPS driving module transforms the GPS signal into NMEA data, generates a first virtual serial port and transmits the NMEA data to the mobile phone driving module via the first virtual serial port.

The GPS mobile phone is unable to recognize the signal acquired by the GPS hardware module 110. Therefore, after the GPS signal from the GPS hardware module 110 is received by the GPS driving module 120, the GPS driving module 120 transforms the GPS signal into NMEA data readable by the GPS mobile phone through driving and calculation. The GPS driving module 120 automatically generates a first virtual serial port and a third virtual serial port when receiving the data. In this embodiment, the first virtual serial port is determined by GPS driving, and communicates with the GPS hardware module 110 to transform the GPS data transmitted by the GPS hardware module 110 into NMEA data through driving and calculation. Then, the NMEA data is written into the first virtual serial port for transmission to the mobile phone driving module 130. At the same time when the GPS hardware module 110 performs the driving and calculation, some LOG information (commissioning information) may be generated. The LOG information is written into a third virtual serial port for reading and analysis by the developers.

103. the mobile phone driving module communicates with the PC driving module and transmits the NMEA data to the PC driving module.

The mobile phone driving module 130 receives the NMEA data and communicates with the PC driving module 210 in a USB data transmission manner. Preferably, the GPS mobile phone is connected to the PC via a USB data cable so as to transmit the NMEA data to the PC driving module 210 in the USB data transmission manner. In this embodiment, the amount of NMEA data is relatively large, so it generally cannot be transmitted to the PC driving module 210 directly; and instead, the NMEA data needs to be firstly stored in a first buffering unit of the mobile phone driving module 130, and is then transmitted to the PC driving module 210 via the first buffering unit.

104. the PC driving module receives the NMEA data and transmits the NMEA data to the virtual serial port driving module. The PC driving module 210 connects with the mobile phone driving module 130 through a USB interface to obtain the NMEA data generated by the GPS mobile phone, and then transmits the NMEA data to the virtual serial port driving module 220.

105. the virtual serial port driving module transforms the NMEA data into serial data, generates a second virtual serial port and transmits the serial data to the navigation module via the second virtual serial port.

Once the NMEA data transmitted by the GPS mobile phone is detected by the PC, the virtual serial port driving module automatically loads a USB-to-serial port driving program to generate a second virtual serial port for transforming the NMEA data into serial data. The serial data is then written into the second virtual serial port for use by the navigation module. In this embodiment, serial data is a kind of NMEA data, and in this case, the second virtual serial port is a protocol port for NMEA of GPS. Preferably, the serial data is firstly stored in a second buffering unit of the second virtual serial port before being transmitted to the navigation module.

106. the navigation module reads the serial data for displaying on a display screen of the PC. Of course, the PC of this embodiment may further comprise an audio alerting module which can provide the serial data in the form of audio messages while the PC is displaying the serial data, which can achieve a more advanced navigation function for the user.

According to the method for a GPS mobile phone to accomplish navigation on a PC, NMEA (National Marine Electronics Association) data received by the GPS mobile phone is transmitted to the PC. Then, a virtual serial port is generated by the PC to transform the NMEA data into serial data for transmission to the navigation module of the PC. The serial data is then read and displayed by the navigation module. In this way, the navigation function of the GPS mobile phone is achieved on the PC, which brings about great convenience to the user.

On the basis of the method described above, the present disclosure further provides a system for a GPS mobile phone to achieve navigation on a PC. As shown in FIG. 2, the system comprises the GPS mobile phone 100 and the PC 200 connected to the GPS mobile phone 100. The GPS mobile phone 100 comprises a GPS hardware module 110, a GPS driving module 120 and a mobile phone driving module 130; and the PC 200 comprises a PC driving module 210, a virtual serial port driving module 220 and a navigation module 230.

The GPS hardware module 110 is configured to acquire a current GPS signal and transmit the GPS signal to the GPS driving module 120.

The GPS driving module 120 is configured to transform the GPS signal into NMEA data, generate a first virtual serial port and transmit the NMEA data to the mobile phone driving module via the first virtual serial port. When the GPS driving module 120 is transforming the NMEA data, some LOG information (commissioning information) may be generated and, at the same time, a third virtual serial port is generated by the GPS driving module so that the LOG information is transmitted to the mobile phone driving module via the third virtual serial port for reading and analysis by the developers.

The mobile phone driving module 130 communicates with the PC driving module in a USB data transmission manner and transmits the NMEA data to the PC driving module 210. Preferably, the mobile phone driving module comprises a first buffering unit 131. The PC stores the NMEA data into the first buffering unit firstly, and then the data buffered is transmitted from the first buffering unit to the PC.

The PC driving module 210 connects to the mobile driving module 130 via a USB data cable to receive the NMEA data, and transmits the NMEA data to the virtual serial port driving module.

The virtual serial port driving module 220 is configured to transform the NMEA data into serial data, generates a second virtual serial port and transmits the serial data to the navigation module via the second virtual serial port. Preferably, the virtual serial port driving module 220 comprises a second buffering unit 221. The virtual serial port driving module 220 stores the serial data obtained through transformation into the second buffering unit firstly, and then the serial data is provided from the second buffering unit to the navigation module for use.

The navigation module 230 is configured to read the serial data for displaying on the screen of the PC.

According to the system for a GPS mobile phone to accomplish navigation on a PC, NMEA data received by the GPS mobile phone is transmitted to the PC. Then, a virtual serial port is generated by the PC to transform the NMEA data into serial data for transmission to the navigation module of the PC. The serial data is then read and displayed by the navigation module. In this way, the GPS mobile phone can not only implement the GPS function on the mobile phone itself, but also function as a terminal for acquiring GPS information so that the navigation function of the GPS mobile phone is achieved on the PC. This brings about great convenience to the user.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims and their equivalents.

## Claims

1. A method for a GPS mobile phone to accomplish navigation on a personal computer (PC), wherein a system for the GPS mobile phone to achieve navigation on the PC comprises the GPS mobile phone and the PC connected to the GPS mobile phone; the GPS mobile phone comprises a GPS hardware module, a GPS driving module and a mobile phone driving module; the PC comprises a PC driving module, a virtual serial port driving module and a navigation module, the method comprising the following steps of:
A. the GPS hardware module acquiring a current GPS signal and transmitting the GPS signal to the GPS driving module;
B. the GPS driving module transforming the GPS signal into NMEA data, generating a first virtual serial port and transmitting the NMEA data to the mobile phone driving module via the first virtual serial port;
C. the mobile phone driving module communicating with the PC driving module and transmitting the NMEA data to the PC driving module;
D. the PC driving module receiving the NMEA data and transmitting the NMEA data to the virtual serial port driving module;
E. the virtual serial port driving module transforming the NMEA data into serial data and generating a second virtual serial port so as to transmit the serial data to the navigation module through the second virtual serial port; and
F. the navigation module reading the serial data for displaying.

2. The method of claim 1, wherein the step B further comprises:
the GPS driving module further generates a third virtual serial port and commissioning information when the GPS driving module transforms the GPS signal into the NMEA data, and the commissioning information is transmitted to the mobile phone driving module via the third virtual serial port.

3. The method of claim 1, further comprising the following step between the step B and the step C:
B 1. storing the NMEA data from the GPS driving module into a first buffering unit of the mobile phone driving module.

4. The method of claim 1, further comprising the following step between the step E and the step F:
E1. storing the serial data from the virtual serial port driving module into a second buffering unit of the virtual serial port driving module.

5. The method of claim 1, wherein the mobile phone driving module communicates with the PC driving module in a USB data transmission manner.

6. A system for a GPS mobile phone to achieve navigation on a PC, comprising the GPS mobile phone and the PC connected to the GPS mobile phone, wherein the GPS mobile phone comprises a GPS hardware module, a GPS driving module and a mobile phone driving module, and the PC comprises a PC driving module, a virtual serial port driving module and a navigation module;
the GPS hardware module is configured to acquire a current GPS signal and transmit the GPS signal to the GPS driving module;
the GPS driving module is configured to transform the GPS signal into NMEA data, generate a first virtual serial port, and transmit the NMEA data to the mobile phone driving module via the first virtual serial port;
the mobile phone driving module is configured to communicate with the PC driving module and transmit the NMEA data to the PC driving module;
the PC driving module is connected to the mobile phone driving module and is configured to receive the NMEA data and transmit the NMEA data to the virtual serial port driving module;
the virtual serial port driving module is configured to transform the NMEA data into serial data, generate a second virtual serial port and transmit the serial data to the navigation module; and
the navigation module is configured to read the serial data for displaying.

7. The system of claim 6, wherein the mobile phone module comprises a first buffering unit configured to store the NMEA data of the mobile phone driving module.

8. The system of claim 6, wherein the virtual serial port driving module comprises a second buffering unit configured to store the serial data of the virtual serial port driving module.
